(19)

**Europäisches Patentamt**
**European Patent Office**
**Office européen des brevets**

(11)   **EP 4 313 538 B1**

(12)   **EUROPEAN PATENT SPECIFICATION**

(45) Date of publication and mention
of the grant of the patent:
**27.08.2025   Bulletin 2025/35**

(21) Application number: **22718219.3**

(22) Date of filing: **28.03.2022**

(51) International Patent Classification (IPC):
*B29C 48/00* (2019.01)    *B29C 48/156* (2019.01)
*B29C 48/16* (2019.01)    *B29C 48/34* (2019.01)
*B29C 48/40* (2019.01)    *B29C 48/625* (2019.01)
*B29C 48/92* (2019.01)    *B29C 70/02* (2006.01)
*B29C 70/50* (2006.01)    *B29C 43/24* (2006.01)
*B29C 43/46* (2006.01)    *B29C 43/48* (2006.01)

(52) Cooperative Patent Classification (CPC):
**B29C 48/92; B29C 43/24; B29C 43/46;**
**B29C 43/48; B29C 48/0022; B29C 48/156;**
**B29C 48/16; B29C 48/34; B29C 48/40;**
**B29C 48/625; B29C 70/026; B29C 70/504;**
B29B 7/007; B29B 7/48; B29B 7/90;        (Cont.)

(86) International application number:
**PCT/EP2022/058096**

(87) International publication number:
**WO 2022/207549 (06.10.2022 Gazette 2022/40)**

(54) **PROCESS FOR THE PRODUCTION OF A GLASS FIBER REINFORCED POLYMER TAPE, AND TAPE SO PRODUCED**

VERFAHREN ZUR HERSTELLUNG EINES GLASFASERVERSTÄRKTEN POLYMERBANDS, UND EIN DANACH HERGESTELLTES POLYMERBAND

PROCÉDÉ POUR LA PRODUCTION D'UNE BANDE DE POLYMÈRE RENFORCÉ PAR DES FIBRES DE VERRE, ET BANDE DE POLYMÈRE AINSI PRODUITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **30.03.2021   EP 21165769**

(43) Date of publication of application:
**07.02.2024   Bulletin 2024/06**

(73) Proprietor: **SABIC Global Technologies B.V.**
**4612 PX Bergen op Zoom (NL)**

(72) Inventors:
• **MV, Supriya**
**6160 GA Geleen (NL)**
• **PATHAM, Bhaskar**
**6160 GA Geleen (NL)**
• **YUAN, Qin**
**6160 GA Geleen (NL)**

• **VALECHA, Rahul**
**6160GA Geleen (NL)**
• **SALES - FERNANDEZ, Jose**
**6160 GA Geleen (NL)**
• **SANDOVAL RIVERA, Rodrigo**
**6160 GA Geleen (NL)**
• **DONNERS, Rob**
**6160 GA Geleen (NL)**

(74) Representative: **Sabic Intellectual Property Group**
**Sabic Intellectual Property Department**
**P.O. Box 3008**
**6160 GA Geleen (NL)**

(56) References cited:
EP-B1- 0 921 919        WO-A1-2009/080281
WO-A1-2019/122317     WO-A1-2019/122318
WO-A1-2022/128783     WO-A1-2022/128784
WO-A1-2022/144250     GB-A- 2 333 737
US-A1- 2016 272 770    US-A1- 2016 346 957

**EP 4 313 538 B1**

**(Cont. next page)**

(52) Cooperative Patent Classification (CPC): (Cont.)
B29C 2043/483; B29C 2948/9258

## EP 4 313 538 B1

**Description**

The present invention relates to a process for the production of a glass fiber reinforced polymer tape. The present invention further relates to a glass fiber reinforced polymer tape and a laminate made from the tape.

Introduced more than a half century ago, fiber-reinforced polymer composition are composite materials with a wide range of applications in industry, for example in the automotive industry. The term "composite" can apply to any combination of individual materials, for example to a thermoplastic polymer (the matrix) in which fibers (reinforcing filler) have been dispersed. The reinforced plastics industry has used glass fibers in different forms for reinforcing polymer matrices to produce a diversity of products.

In the production of short glass fiber compositions or compounds, chopped strands of predetermined length are mixed with a thermoplastic polymer in an extruder, during which the integrity of the glass fiber strands is destroyed and the glass fibers are dispersed throughout the molten thermoplastic polymer; due to fiber breakage the fiber length is decreased during this process, typically to well below 1 mm. Long glass fiber-reinforced polymer compositions contain glass fibers having a length of at least 1 mm, often at least 2 mm and typically between 5 and 20 mm. As a result, glass fibers in moulded articles made from long glass fiber-reinforced polymer compositions generally are of higher length than in articles made from short glass fiber compositions, resulting in better mechanical properties. For that reason long glass fiber-reinforced polymer compositions are preferred for applications wherein good mechanical properties are necessary.

Furthermore, WO2019/122318 discloses a process for the production of a long glass fiber reinforced polymer tape. However the tape produced in the process discloses in WO2019/122318 has poor mechanical performance and high warpage when made into laminate which makes it unsuitable for many applications.

Furthermore, WO2019/122317 discloses a tape comprising a plurality of sheathed continuous multifilament strands, wherein each of the sheathed continuous multifilament strands comprises a core that extends in the longitudinal direction and a polymer sheath which intimately surrounds said core, wherein each of the cores comprises an impregnated continuous multifilament strand comprising at least one continuous glass multifilament strand. However, WO2019/122317 is silent on the possible effect of the tex number of glass fiber to the physical properties of the glass fiber reinforced polymer tape.

Therefore there is a need of a long glass fiber-reinforced polymer tape with improvement in mechanical performance and low warpage when made into laminates. More specifically, "improvement in mechanical performance" means improvement on tensile modulus. Preferably the tap also has lower density and a thinner thickness.

The aforementioned needs are satisfied by a process for the production of a glass fiber reinforced polymer tape, comprising the subsequent steps of

   a) unwinding from a package of at least one continuous glass multifilament strand;

   b) applying the impregnating agent to the continuous glass multifilament strands to form the impregnated continuous multifilament strands

   c) applying a sheath of thermoplastic polymer around said multifilament strand to form a sheathed continuous multifilament strand, wherein:

   -    wherein the tex number of the glass multifilament strand is in the range from 568 to 980,

   -    the total amount of the continuous glass multifilament strand in the glass fiber reinforced polymer tape is from 55 to 70 wt% on the basis of the total weight of the glass fiber reinforced polymer tape,

   d) providing the plurality of sheathed continuous multifilament strands obtained in step c),

   e) placing the plurality of sheathed continuous multifilament strands in parallel alignment in the longitudinal direction,

   f) grouping the plurality of sheathed continuous multifilament strands,
   wherein steps e) and f) are performed such that the sheathed continuous multifilament strand can be consolidated and

   g) subsequently consolidating the plurality of sheathed continuous multifilament strands to form a tape.

The inventor of the present invention surprising found that the glass fiber reinforced polymer tape obtained by the process of the invention has higher modulus, lower density and a thinner thickness. The laminate made from the tape according to the invention also shows lower warpage.

The total amount of the continuous glass multifilament strand in the glass fiber reinforced polymer tape is preferably from 55 to 70 wt% on the basis of the total weight of the glass fiber reinforced polymer tape.

In one embodiment, the total amount of the continuous glass multifilament strand in the composition is preferably from 58 to 68 wt% on the basis of the total weight of the glass fiber reinforced polymer tape.

As all the sheathed continuous multifilament strands are essentially identical, the total amount of the continuous glass multifilament strand in the glass fiber reinforced polymer tape is essentially identical to the amount of the continuous glass multifilament strand in the sheathed continuous multifilament strand.

Steps a)-c) are described in detail in WO2009/080281A1, which document is hereby incorporated by reference.

For purpose of the invention with 'such that the plurality of sheathed continuous multifilament strand can be consolidated' is meant that the plurality of sheathed continuous multifilament strands are placed in such a vicinity to one another that they can be melted together.

Steps e) and f) can be performed by first placing the plurality of sheathed continuous multifilament strands in parallel alignment in the longitudinal direction after which the plurality of sheathed continuous multifilament strands are grouped. However, steps e) and f) can also be performed by first grouping the plurality of sheathed continuous multifilament strands after which the plurality of sheathed continuous multifilament strands is placed in a parallel alignment in the longitudinal direction.

Steps e) and f) can also be performed in one and the same step, for example by pulling the plurality of sheathed continuous multifilament strand through a slit die (a die with an opening in the form of a rectangle, preferably a slit die having an opening with dimensions that are comparable to the thickness and width dimensions of the tape to be produced).

Step g) of the consolidation of the plurality of sheathed continuous multifilament strand for form the tape is performed in a consolidation unit. An example of a consolidation unit includes but is not limited to a belt press.

Step g) is preferably performed by sequential steps of

g1) heating and exerting pressure on the plurality of sheathed continuous multifilament strand to obtain a product made of consolidated strands and

g2) cooling and solidifying the product obtained by step g1), e.g. by chill rolls, a water bath, a blower a fan or a high speed air knife.

Step g1) is preferably performed e.g. by sequential steps of

g1a) melting the plurality of sheathed continuous multifilament strand to merge the strands, e.g. by hot air gun/rolls, flat belts, an oven or a belt press and

g1b) exerting pressure on the product obtained by step g1a) for better consolidation and to adjust its thickness, e.g. by calendaring rolls.

Step g1a) heats the plurality of sheathed continuous multifilament strand to melt them, so that they will be merged. This also improves the impregnation of the impregnated continuous multiflamet strands in the thermoplastic polymer, Examples of units for performing step g1a) include air gun, hot rolls, flat belts, an oven and a belt press. The use of hot rolls for step g1a) has an advantage that it can be performed at a high speed. The advantage of using flat belts or belt press is that the tape directly contact with the belt to achieve a good heat transfer, which results in a better impregnation. Step g1b) is performed at a lower temperature than the previous step, which further improves the impregnation of the impregnated continuous multiflamet strands in the thermoplastic polymer and assist in better consolidation of the tape which results in improved tape properties. This further achieves a good surface quality. Step g2) results in the final solid tape. This can be performed using chill rolls, which advantageously achieves a relatively slow cooling to reduce shrinkage. Some other possible cooling methods are water bath, blower, fan, high speed air knife, etc. These technologies can reach fast cooling, especially water bath.

It should be noted that the thickness of the tape may be adjusted only to a very limited extend in step g1) as exerting too much pressure would lead the thermoplastic polymer to spread out. Preferably the tape obtained by the process has a thickness in the range from 0.15 to 1.48 mm, preferably from 0.35 to 1.35 mm, more preferably from 0.40 to 1.18 mm.

The process may further comprise the step h) of cutting the tape obtained by step g) into desired length, which may be stacked or wound.

The process according to the invention can be run at line speeds of at least 100 m/min, preferably at least 200 m/min, more preferably at least 300 m/min. In a preferred embodiment the line speed may be from 300 - 500 m/min such as from 350 to 500 m/min. If the speed goes above 500 m/min the cooling of the sheathed strand prior to cutting becomes more problematic.

In another aspect, the invention relates to a tape obtained or obtainable by the process of the invention.

Glass fiber reinforced polymer tape

In another aspect, the invention relates to a glass fiber reinforced polymer tape comprising a plurality of continuous glass multifilament strand,

- wherein the continuous glass multifilament strands are arranged essentially parallel with each other,

- wherein the continuous glass multifilament strands are arranged essentially in the same plane,

- wherein the continuous glass multifilament strands are imbedded in a thermoplastic polymer,

- wherein the total amount of continuous glass multifilament strand is in the range of 55 to 70wt% based on the a glass fiber reinforced polymer tape,

- wherein the glass continuous glass multifilament strand has a tex number in the range range from 520 to 980, preferably in the range from 568 to 856, more preferably in the range from 585 to 750,

- wherein the glass fiber reinforced polymer tape has a thickness in the range from 0.15 to 1.48 mm.

Preferably the glass fiber reinforced polymer tape has a thickness in the range from 0.35 to 1.35 mm, preferably in the range from 0.40 to 1.18 mm.
Preferably the thermoplastic polymer has an MFI in the range from 20 to 83 dg/min as measure according to ISO1133, 230°C/2.16 kg.
It has been found that the glass fiber reinforced polymer tape using lower TEX has higher modulus (also known as Young's modulus or stiffness), lower density and thinner thickness comparing to tapes comprising continuous glass strands with higher tex.
In the context of the invention with 'tape' is meant an object whose thickness is very thin in relation to its length and width. That is, the tape has a high width to thickness ratio. Typically the width of a tape is between 1-1500 times, for example 2-100 times, larger than the thickness. The length of the tape can be indefinite. The tape may have a rectangular cross-, but may also have profiled sections (corrugated, ribbed etc.).
The tape is preferably prepared in the process according to the invention.

Laminate

The invention relates to a laminate of a plurality of tapes of the invention. Within the framework of the invention, with 'laminate' is meant an arrangement in which at least two plies (layers) of the tapes of the invention are present. For example, such laminate contains 2, 3, 4, 5, 6, 7, 8, 9, 10, or more plies, wherein one ply consists of the tape of the invention. For example, in the laminate, the plies may be positioned such that their respective continuous glass multifilament strands are not parallel to each other. In case their respective sheathed continuous glass multifilament strands are positioned in relation to one other in a substantially 90° angle, such laminate is usually referred to as cross-ply. Laminates of the invention can for example be assembled or processed into two-dimensional or three-dimensional structures, such as, for example, via winding and/or lay-up techniques, more specifically, via double belt press or hot press.
The tapes and laminates of the invention can for example be used in an automotive application or construction application.
Because of the difference of their structures, for applications which require isotropic strength laminate is preferred over tapes.
It was found that the laminate prepared from the tapes according to the invention has lower warpage.

Continuous glass multifilament strand

Glass fibers in the glass fiber reinforced polymer composition are generally supplied as a plurality of continuous, very long filaments, and can be in the form of strands, rovings or yarns. A filament is an individual fiber of reinforcing material. A strand is a plurality of bundled filaments. Yarns are collections of strands, for example strands twisted together. A roving refers to a collection of strands wound into a package.
For purpose of the invention, a glass multifilament strand is defined as a plurality of bundled glass filaments.
Glass multifilament strands and their preparation are known in the art.
The filament density of the continuous glass multifilament strand may vary within wide limits. For example, the continuous glass multifilament strand may have at least 250, for example at least 1000 and/or at most 4000 glass filaments/strand.

The density of the continuous glass multifilament strand can also be quantified by weight in grams per km known as "tex". E.g. a continuous glass multifilament strand with a tex number of 6000 means the continuous glass multifilament strand weighs 6000 grams per km length.

For the purpose of the present invention, the tex number of the glass multifilament strand is in the range from 520 to 980, preferably in the range from 568 to 856, more preferably in the range from 585 to 750. A too low tex number could lead to breakage of the strand during the high through put production at 100m/min.

The thickness of the glass filaments is preferably in the range from 5 to 50 $\mu$m, more preferably from 10 to 30 $\mu$m, even more preferably from 15 to 25 $\mu$m. Usually the glass filaments are circular in cross section meaning the thickness as defined above would mean diameter. The glass filaments are generally circular in cross section.

The length of the glass filaments is in principle not limited as it is substantially equal to the length of the sheathed continuous multifilament strand. For practical reasons of being able to handle the sheathed continuous multifilament strand or tape however, it may be necessary to cut the sheathed continuous multifilament strand into a shorter strand. For example the length of the sheathed continuous multifilament strand is at least 1 m, for example at least 10 m, for example at least 50 m, for example at least 100m, for example at least 250 m, for example at least 500m and/or for example at most 25 km, for example at most 10km.

Preferably, the continuous glass multifilament strand in the glass fiber reinforced polymer composition of the invention comprises at most 2 wt%, preferably in the range from 0.15 to 1wt% of a sizing based on the continuous glass multifilament strand. The amount of sizing can be determined using ISO 1887:2014.

A sizing composition is typically applied to the glass filaments before the glass filaments are bundled into a continuous glass multifilament strand.

Suitable examples of sizing compositions include solvent-based compositions, such as an organic material dissolved in aqueous solutions or dispersed in water and melt- or radiation cure-based compositions. Preferably, the sizing composition is an aqueous sizing composition.

As described in the art, e.g. in documents EP1460166A1, EP0206189A1 or US4338233, the aqueous sizing composition may include film formers, coupling agents and other additional components.

The film formers are generally present in effective amount to protect fibers from interfilament abrasion and to provide integrity and processability for fiber strands after they are dried. Suitable film formers are miscible with the polymer to be reinforced. For example; for reinforcing polypropylenes, suitable film formers generally comprise polyolefin waxes.

The coupling agents are generally used to improve the adhesion between the matrix thermoplastic polymer and the fiber reinforcements. Suitable examples of coupling agents known in the art as being used for the glass fibers include organofunctional silanes. More particularly, the coupling agent which has been added to the sizing composition is an aminosilane, such as aminomethyl- trimethoxysilane, N-(beta-aminoethyl)-gamma-aminopropyl-trimethoxysilane, gamma-aminopropyl-trimethoxysilane gamma-methylaminopropyl-trimethoxysilane, delta-aminobutyl-triethoxysilane, 1 ,4-aminophenyl- trimethoxysilane. Preferably, in the tape of the invention, the sizing composition contains an aminosilane to enable a good adhesion to the thermoplastic matrix. The sizing composition may further comprise any other additional components known to the person skilled in the art to be suitable for sizing compositions. Suitable examples include but are not limited to lubricants (used to prevent damage to the strands by abrasion) antistatic agents, crosslinking agents, plasticizers, surfactants, nucleation agents, antioxidants, pigments as well as mixtures thereof.

Typically, after applying the sizing composition to the glass filaments, the filaments are bundled into the continuous glass multifilament strands and then wound onto bobbins to form a package.

Impregnating agent

In the glass fiber reinforced polymer composition of the invention, the impregnated continuous multifilament strand is prepared from a continuous glass multifilament strand and an impregnating agent and in particular by applying an impregnating agent to the continuous glass multifilament strand preferably in an amount from 0.50 to 18.0 wt%, for example from 0.5 to 10.0 wt% or for example from 10.0 to 18.0 wt%based on the sheathed continuous multifilament strands.

The optimal amount of impregnating agent applied to the continuous glass multifilament strand depends on the polymer sheath, on the size (diameter) of the glass filaments forming the continuous glass strand, and on the type of sizing composition. Typically, the amount of impregnating agent applied to the continuous glass multifilament strand is for example at least 0.50 wt%, preferably at least 1.0wt%, preferably at least 1.5wt%, preferably at least 2wt%, preferably at least 2.5 wt% and/or at most 10.0wt%, preferably at most 9.0 wt%, more preferably at most 8.0 wt%, even more preferably at most 7.0 wt%, even more preferably at most 6.0wt%, even more preferably at most 5.5wt%, or for example at least 10.0 wt%, preferably at least 11wt%, preferably at least 12wt% and/or at most 18 wt%, preferably at most 16 wt%, preferably at most 14% based on the amount of sheathed continuous multifilament strands. Preferably, the amount of impregnating agent is in the range from 1.5 to 8wt%, even more preferably in the range from 2.5 wt% to 6.0 wt% based on the sheathed continuous multifilament strand. A higher amount of impregnating agent increases the Impact Energy per unit of thickness (J/mm). However, for reasons of cost-effectiveness and low emissions (volatile organic compounds) and mechanical properties, the amount of impregnating agent should also not become too high.

For example, the ratio of impregnating agent to continuous glass multifilament strand is in the range from 1:4 to 1:30, preferably in the range from 1:5 to 1:20.

Preferably, the viscosity of the impregnating agent is in the range from 2.5 to 200cSt at 160°C, more preferably at least 5.0 cSt, more preferably at least 7.0 cSt and/or at most 150.0 cSt, preferably at most 125.0 cSt, preferably at most 100.0cSt at 160°C.

An impregnating agent having a viscosity higher than 100 cSt is difficult to apply to the continuous glass multifilament strand. Low viscosity is needed to facilitate good wetting performance of the fibers, but an impregnating agent having a viscosity lower than 2.5 cSt is difficult to handle, e.g., the amount to be applied is difficult to control; and the impregnating agent could become volatile. For purpose of the invention, unless otherwise stated, the viscosity of the impregnating agent is measured in accordance with ASTM D 3236-15 (standard test method for apparent viscosity of hot melt adhesives and coating materials, Brookfield viscometer Model RVDV 2, #27 spindle, 5 r/min) at 160°C.

Preferably, the melting point of (that is the lowest melting temperature in a melting temperature range) the impregnating agent is at least 20°C below the melting point of the thermoplastic polymer composition. More preferably, the impregnating agent has a melting point of at least 25 or 30°C below the melting point of the thermoplastic polymer composition. For instance, when the thermoplastic polymer composition has a melting point of about 160°C, the melting point of the impregnating agent may be at most about 140°C.

Suitable impregnating agents are compatible with the thermoplastic polymer to be reinforced, and may even be soluble in said polymer. The skilled man can select suitable combinations based on general knowledge, and may also find such combinations in the art.

Suitable examples of impregnating agents include low molar mass compounds, for example low molar mass or oligomeric polyurethanes, polyesters such as unsaturated polyesters, polycaprolactones, polyethyleneterephthalate, poly(alpha-olefins), such as highly branched polyethylenes and polypropylenes, polyamides, such as nylons, and other hydrocarbon resins.

For reinforcing polypropylenes, the impregnating agent preferably comprises highly branched poly(alpha-olefins), such as highly branched polyethylenes, modified low molecular weight polypropylenes, mineral oils, such as, paraffin or silicon and any mixtures of these compounds.

The impregnating agent preferably comprises at least 20wt%, more preferably at least 30wt%, more preferably at least 50wt%, for example at least 99.5wt%, for example 100wt% of a branched poly(alpha-olefin), most preferably a branched polyethylene.

To allow the impregnating agent to reach a viscosity of from 2.5 to 200cSt at 160°C, the branched poly(alpha-olefin) may be mixed with an oil, wherein the oil is chosen from the group consisting of mineral oils, such as a paraffin oil or silicon oil; hydrocarbon oils; and any mixtures thereof.

Preferably, the impregnating agent is non-volatile, and/or substantially solvent-free. In the context of the present invention, non-volatile means that the impregnating agent has a boiling point or range higher than the temperatures at which the impregnating agent is applied to the continuous multifilament glass strand. In the context of present invention, "substantially solvent-free" means that impregnating agent contains less than 10 wt% of solvent, preferably less than 5wt% of solvent based on the impregnating agent. In a preferred embodiment, the impregnating agent does not contain any organic solvent.

The impregnating agent may further be mixed with other additives known in the art. Suitable examples include lubricants; antistatic agents; UV stabilizers; plasticizers; surfactants; nucleation agents; antioxidants; pigments; dyes; and adhesion promoters, such as a modified polypropylene having maleated reactive groups; and any combinations thereof, provided the viscosity remains within the desired range. Any method known in the art may be used for applying the liquid impregnating agent to the continuous glass multifilament strand. The application of the liquid impregnating agent may be performed using a die. Other suitable methods for applying the impregnating agent to the continuous multifilament strands include applicators having belts, rollers, and hot melt applicators. Such methods are for example described in documents EP0921919B1, EP0994978B1, EP0397505B1, WO2014/053590A1 and references cited therein. The method used should enable application of a constant amount of impregnating agent to the continuous multifilament strand.

Thermoplastic polymer

The polymer sheath consists of a thermoplastic polymer composition.

The thermoplastic polymer composition preferably comprises a thermoplastic polymer. Suitable examples of thermoplastic polymers include but are not limited to polyamide, such as polyamide 6, polyamide, 66 or polyamide 46; polyolefins, for example polypropylenes and polyethylenes; polyesters, such as polyethylene terephthalate, polybutylene terephthalate; polycarbonates; polyphenylene sulphide; polyurethanes and and mixtures thereof.

Preferably, the melt flow rate (MFR) of the thermoplastic polymer is in the range from 20 to 83 dg/min, preferably from 35 to 65 dg/min as measured according to ISO1133 (2.16kg/230°C).

The thermoplastic polymer is preferably a polyolefin, more preferably a polyolefin chosen from the group of polypropylenes or elastomers of ethylene and α-olefin comonomer having 4 to 8 carbon atoms, and any mixtures thereof.

In one embodiment, preferably the thermoplastic polymer composition comprises at least 80wt% of a thermoplastic polymer, for example at least 90wt% polyolefin, at least 93wt%, for example at least 95wt%, for example at least 97wt% of thermoplastic polymer, for example at least 98wt% or for example at least 99wt% of a thermoplastic polymer based on the thermoplastic polymer composition. In a special embodiment, the thermoplastic polymer composition consists of a thermoplastic polymer.

In another embodiment, the thermoplastic polymer composition comprises at least 60wt%, for example at least 70wt%, for example at least 75wt% and/or at most 99wt%, for example at most 95wt%, for example at most 90wt% thermoplastic polymer.

The polypropylene may for example be a propylene homopolymer or a random propylene -α-olefin copolymer or a heterophasic propylene copolymer.

A propylene homopolymer can be obtained by polymerizing propylene under suitable polymerization conditions. A propylene copolymer can be obtained by copolymerizing propylene and one or more other α-olefins, preferably ethylene, under suitable polymerization conditions. The preparation of propylene homopolymers and copolymers is, for example, described in Moore, E. P. (1996) Polypropylene Handbook. Polymerization, Characterization, Properties, Processing, Applications, Hanser Publishers: New York.

The α-olefin in the random propylene α-olefin copolymer is for example an α-olefin chosen from the group of α-olefin having 2 or 4 to 10 C-atoms, preferably ethylene, 1-butene, 1-hexene or any mixtures thereof. The amount of of α-olefin is preferably at most 10wt% based on the propylene α-olefin copolymer, for example in the range from 2-7wt% based on the propylene α-olefin copolymer.

Polypropylenes can be made by any known polymerization technique as well as with any known polymerization catalyst system. Regarding the techniques, reference can be given to slurry, solution or gas phase polymerizations; regarding the catalyst system reference can be given to Ziegler-Natta, metallocene or single-site catalyst systems. All are, in themselves, known in the art.

Heterophasic propylene copolymers are generally prepared in one or more reactors, by polymerization of propylene in the presence of a catalyst and subsequent polymerization of a propylene-α-olefin mixture. The resulting polymeric materials are heterophasic, but the specific morphology usually depends on the preparation method and monomer ratio.

The heterophasic propylene copolymer as defined herein consists of a propylene-based matrix and a dispersed ethylene-α-olefin copolymer.

The propylene-based matrix typically forms the continuous phase in the heterophasic propylene copolymer.

The propylene-based matrix consists of a propylene homopolymer and/or a propylene- α-olefin copolymer consisting of at least 70% by mass of propylene and up to 30% by mass of α-olefin, for example ethylene, for example consisting of at least 80% by mass of propylene and up to 20% by mass of α-olefin, for example consisting of at least 90% by mass of propylene and up to 10% by mass of α-olefin, based on the total mass of the propylene-based matrix.

Preferably, the α-olefin in the propylene-α-olefin copolymer is selected from the group of α-olefins having 2 or 4-10 carbon atoms and is preferably ethylene.

Preferably, the propylene-based matrix consists of a propylene homopolymer.

The melt flow index (MFI) of the propylene-based matrix (before it is mixed into the composition of the invention) may be in the range of for example 0.3 to 200dg/min as measured according to ISO1133 (2.16 kg/230°C).

The propylene-based matrix is for example present in an amount of 50 to 85 wt% based on the total heterophasic propylene copolymer.

Besides the propylene-based matrix, the heterophasic propylene copolymer also consists of a dispersed ethylene-α-olefin copolymer. The dispersed ethylene-α-olefin copolymer is also referred to herein as the 'dispersed phase'. The dispersed phase is embedded in the heterophasic propylene copolymer in a discontinuous form.

The MFI of the dispersed ethylene α-olefin copolymer may vary between wide range and may for example be in the range from for example be in the range from 0.001 to 10dg/min (measured according to ISO1133 (2.16 kg/230°C as calculated

using the following formula:

$$MFR\ EPR = 10 \wedge (\frac{Log\ MFR\ heterophasic - matrix\ content * Log\ MFR\ PP}{rubber\ content})$$

wherein MFR heterophasic is the melt flow rate of the heterophasic propylene copolymer measured according to ISO1133 (2.16kg/230°C),
MFR PP is the MFR of the propylene-based matrix of the heterophasic propylene copolymer measured according to ISO1133 (2.16kg/230°C)
matrix content is the amount of propylene-based matrix in the heterophasic propylene copolymer in wt% and
rubber content is the amount of ethylene $\alpha$-olefin copolymer in the heterophasic propylene copolymer in wt%.

The dispersed ethylene-$\alpha$-olefin copolymer is for example present in an amount of 50 to 15wt% based on the total heterophasic propylene copolymer.

For example, the amount of ethylene in the ethylene-$\alpha$-olefin copolymer (RCC2) is in the range of 20-65wt% based on the ethylene-$\alpha$-olefin copolymer.

The amounts of the propylene-based matrix and the dispersed ethylene-$\alpha$-olefin copolymer, as well as the amount of ethylene in the ethylene $\alpha$-olefin copolymer may be determined by $^{13}$C-NMR, as is well known in the art.

In the heterophasic polypropylene, the sum of the total weight of the propylene-based matrix and the total weight of the dispersed ethylene-$\alpha$-olefin copolymer is 100wt%

The $\alpha$-olefin in the ethylene-$\alpha$-olefin copolymer is preferably chosen from the group of $\alpha$-olefins having 3 to 8 carbon atoms and any mixtures thereof, preferably the $\alpha$-olefin in the ethylene-$\alpha$-olefin copolymer is chosen from the group of $\alpha$-olefinshaving 3 to 4 carbon atoms and any mixture thereof, more preferably the $\alpha$-olefin is propylene, in which case the ethylene-$\alpha$-olefin copolymer is ethylene-propylene copolymer. Examples of suitable $\alpha$-olefinshaving 3 to 8 carbon atoms, which may be employed as ethylene comonomers to form the ethylene $\alpha$-olefin copolymer include but are not limited to propylene, 1-butene, 1-pentene, 4-methyl-1-pentene, 1-hexen, 1-heptene and 1-octene.

The elastomer of ethylene and $\alpha$-olefin comonomer having 4 to 8 carbon atoms may for example have a density in the range from 0.850 to 0.915 g/cm$^3$. Such elastomers are sometimes also referred to as plastomers.

The $\alpha$-olefin comonomer in the elastomer is preferably an acyclic monoolefin such as 1-butene, 1-pentene, 1-hexene, 1-octene, or 4-methylpentene.

Accordingly, the elastomer is preferably selected from the group consisting of ethylene-1-butene copolymer, ethylene-1-hexene copolymer, ethylene-1-octene copolymer and mixtures thereof, more preferably wherein the elastomer is selected from ethylene-1-octene copolymer. Most preferably, the elastomer is an ethylene-1-octene copolymer.

Preferably, the density of the elastomer is at least 0.865 g/cm$^3$ and/or at most 0.910 g/cm$^3$. For example, the density of the elastomer is at least 0.850, for example at least 0.865, for example at least 0.88, for example at least 0.90 and/or for example at most 0.915, for example at most 0.910, for example at most 0.907, for example at most 0.906 g/cm$^3$. More preferable the density of the elastomer is in the range from 0.88 up to an including 0.907 g/cm$^3$, most preferably, the density of the elastomer is in the range from 0.90 up to and including 0.906 g/cm$^3$.

Elastomers which are suitable for use in the current invention are commercially available for example under the trademark EXACT™ available from Exxon Chemical Company of Houston, Texas or under the trademark ENGAGE™ polymers, a line of metallocene catalyzed plastomers available from Dow Chemical Company of Midland, Michigan or under the trademark TAFMER™ available from MITSUI Chemicals Group of Minato Tokyo or under the trademark Nexlene™ from SK Chemicals.

The elastomers may be prepared using methods known in the art, for example by using a single site catalyst, i.e., a catalyst the transition metal components of which is an organometallic compound and at least one ligand of which has a cyclopentadienyl anion structure through which such ligand bondingly coordinates to the transition metal cation. This type of catalyst is also known as "metallocene" catalyst. Metallocene catalysts are for example described in U.S. Patent Nos. 5,017,714 and 5,324,820. The elastomer s may also be prepared using traditional types of heterogeneous multi-sited Ziegler-Natta catalysts.

Preferably, the elastomer has a melt flow index of 0.1 to 40 dg/min (ISO1133, 2.16kg, 190°C), for example at least 1 dg/min and/or at most 35 dg/min. More preferably, the elastomer has a melt flow index of at least 1.5 dg/min, for example of at least 2 dg/min, for example of at least 2.5 dg/min, for example of at least 3 dg/min, more preferably at least 5 dg/min and/or preferably at most 30 dg/min, more preferably at most 20 dg/min, more preferably at most 10 dg/min measured in accordance with ISO 1133 using a 2.16 kg weight and at a temperature of 190 °C.

Preferably, the amount of ethylene incorporated into the elastomer is at least 50 mol %. More preferably, the amount of ethylene incorporated into the elastomer is at least 57 mol%, for example at least 60 mol %, at least 65 mol% or at least 70 mol%. Even more preferably, the amount of ethylene incorporated into the elastomer is at least 75 mol%. The amount of ethylene incorporated into the elastomer may typically be at most 97.5 mol%, for example at most 95 mol% or at most 90 mol%.

The thermoplastic polymer composition may contain the usual additives, for instance nucleating agents and clarifiers, stabilizers, release agents, fillers, peroxides, plasticizers, anti-oxidants, lubricants, antistatics, cross linking agents, scratch resistance agents, high performance fillers, pigments and/or colorants, impact modifiers, flame retardants, blowing agents, acid scavengers, recycling additives, coupling agents, anti-microbials, anti-fogging additives, slip additives, antiblocking additives, polymer processing aids and the like. Such additives are well known in the art. The skilled person will know how to choose the type and amount of additives such that they do not detrimentally influence the aimed properties. In a special embodiment, the thermoplastic polymer composition consists of the thermoplastic polymer and additives.

Any method known in the art to apply a sheath of thermoplastic polymer around the at least one impregnated continuous multifilament strand may be used in present invention. The sheathing or wire-coating process typically involves the application of a polymer layer on the outer surface of the at least one impregnated continuous multifilament strand as it passes through the polymer melt in a die. The resulting sheathed continuous glass multifilament strands comprise a core with at least one impregnated continuous glass multifilament strands and a sheath comprising a thermoplastic polymer. No, or subsantially no thermoplastic polymer will be present between the at least one impregnated continuous multifilament strand and/or the individual filaments of such strand.

Although the invention has been described in detail for purposes of illustration, it is understood that such detail is solely for that purpose and variations can be made therein by those skilled in the art without departing from the spirit and scope of the invention as defined in the claims.

It is further noted that the invention relates to all possible combinations of features described herein, preferred in particular are those combinations of features that are present in the claims. It will therefore be appreciated that all combinations of features relating to the composition according to the invention; all combinations of features relating to the process according to the invention and all combinations of features relating to the composition according to the invention and features relating to the process according to the invention are described herein.

It is further noted that the term 'comprising' does not exclude the presence of other elements. However, it is also to be understood that a description on a product/composition comprising certain components also discloses a product/composition consisting of these components. The product/composition consisting of these components may be advantageous in that it offers a simpler, more economical process for the preparation of the product/composition. Similarly, it is also to be understood that a description on a process comprising certain steps also discloses a process consisting of these steps. The process consisting of these steps may be advantageous in that it offers a simpler, more economical process.

Experiment

Material

SABIC® PP579S propylene homopolymer with a MFI of 45 g/10 min (ISO 1133, 230°C/2.16 kg) was used as thermoplastic polymer of the polymeric sheath.

Glass fiber strands with tex number 600and 6000 were used in the experiment. The diameter of the individual glass fiber in the strand is 17 micron. All the glass fibers are coated with aminosilane-contraining sizing composition. The glass fiber strands are commercially available from 3B.

Dicera 13082 Paramelt was used as impregnation agent.

Additive package consist of 50 wt% coupling agent, 30 wt% black color masterbatch and 20 wt% stabilizer. The wt% is based on the total weight of the additive package

Process

The formulations of glass fiber reinforced polymer tape as samples are shown in Table 1.

Glass fiber reinforced polymer tape was produced according to following process:

Unwinding a glass fiber strand;

Applying the impregnating agent to the glass fiber strands to form an impregnated strand, the amount of impregnating agent is 4wt% based on the total amount of the glass fiber reinforced polymer composition;

Applying the polymeric sheath in a sheathing step which was performed in-line directly after the impregnating step, using a 75 mm twin screw extruder (manufactured by Berstorff, screw UD ratio of 34), at a temperature of about 250°C, which fed the molten propylene homopolymer and additives to an extruder-head wire-coating die. The line speed was 100 meters per min.

Plurality of sheathed strands were produced simultaneously and placed in parallel alignment in the longitudinal direction of the strands. Then the strands were grouped and consolidated into a tape between two rollers. After the consolidation the tape were air cooled and cut.

The thickness of the tapes were measured. The result of the measurement is shown in Table 1.

Some tapes were further cut into a shape according to ISO527-1:2019 in the longitudinal direction of the glass fiber strands for modulus measurement. The result of the modulus is shown in Table 1.

The density of the tapes was measured according to ISO 1183-1:2012.

Some tapes were further cut into a 15 *15 cm square shape wherein two facing edges of the square are parallel with the glass fiber strands in the tape. Then tapes were formed into cross-ply composite laminate by placing two tapes in in a manner that the glass fiber strands in one tape are perpendicular to the glass fiber strands in the other tape and then by repeating the step of the double belt press. For the lamination, the belt speed was set to 1.0m/min and the gap between the belts was set such that the thickness of the laminates was on average 3.0mm. As the tapes of different samples have different thicknesses, to confer the 3.0 mm thickness of the laminate, the number of tapes used for each sample differs.

The warpage behavior of the laminates was identified by visual inspection as shown in Table 1.

Table 1 Composition of the glass fiber reinforced polymer and their properties

|  | IE1 | CE1 |
|---|---|---|
| TEX | 600 | 6000 |
| Glass fiber (wt %) | 60 | 60 |
| Line speed (m/min) | 100 | 100 |
| Thermoplastic polymer (wt%) | 30.54 | 30.54 |
| Impregnating agent (wt%) | 4.00 | 4.00 |
| Additive package (wt%) | 5.46 | 5.46 |
| Thickness of Tape (mm) | 0.45 | 1.6 |
| Density of Tape (g/cm3) | 1.19 | - |
| Modulus of Tape (GPa) | 29.54 | 23 |
| Warpage of laminate | No visible warpage | Severe warpage |

According to the Table 1, decreasing tex number of glass fiber in a glass fiber reinforced polymer tape leads to the following advantages: Lower density of the tape, higher stiffness of the tape and no visual warpage of cross-ply laminate made of the tape.

**Claims**

1. Process for the production of a glass fiber reinforced polymer tape, comprising the subsequent steps of

a) unwinding from a package of at least one continuous glass multifilament strand;
b) applying the impregnating agent to the continuous glass multifilament strands to form the impregnated continuous multifilament strands
c) applying a sheath of thermoplastic polymer around said multifilament strand to form a sheathed continuous multifilament strand, wherein:

- wherein the tex number of the glass multifilament strand is in the range from 568 to 980,
- the amount of the at least one continuous glass multifilament strand in the composition is from 55 to 70 wt% on the basis of the total weight of the composition.

d) providing the plurality of sheathed continuous multifilament strands obtained in step c),
e) placing the plurality of sheathed continuous multifilament strands in parallel alignment in the longitudinal direction,
f) grouping the plurality of sheathed continuous multifilament strands,
wherein steps e) and f) are performed such that the sheathed continuous multifilament strand can be consolidated and
g) subsequently consolidating the plurality of sheathed continuous multifilament strands to form a tape.

2. Process according to claim 1 wherein the at least one continuous glass multifilament strand is one continuous glass multifilament strand.

3. Process according to claim 1 or 2 wherein the thermoplastic polymer is a polypropylene composition with an MFI in the range of 20 to 83 dg/min as measure according to ISO1133, 230°C/2.16 kg.

4. Process according to any one of the previous claims wherein the tex number of the glass multifilament strand is in the range from 568 to 856, preferably in the range from 585 to 750.

5. Process according to any one of the previous claims wherein the amount of the at least one continuous glass multifilament strand in the composition is from 55 to 70 wt%, more preferably in the range from on the basis of the total weight of the tape.

6. Process according to any one of the previous claims wherein the process runs at a line speed of at least 100 m/min.

7. Process according to any one of the previous claims, wherein the sheathed continuous multifilament strand formed in step c) is not cut during steps a)-g)

8. Process according to any one of the previous claims wherein the process further comprises step h) of cutting the tape obtained by step g) into desired length.

9. Process according to any one of the previous claims, wherein step g) is performed by sequential steps of

> g1) heating and applying pressure on the plurality of sheathed continuous multifilament strand to obtain a product made of consolidated strands and
> g2) cooling and solidifying the product obtained by step g1), e.g. by chill rolls, a water bath, a blower a fan or a high speed air knife.

10. Process according to any one of claims 9, wherein step g1) is performed by sequential steps of

> g1a) melting the plurality of sheathed continuous multifilament strand to merge the strands, e.g. by hot rolls, flat belts, an oven or a belt press and
> g1b) applying pressure on the product obtained by step g1a) to adjust its thickness, e.g. by calendaring rolls.

11. A glass fiber reinforced polymer tape comprising a plurality of continuous glass multifilament strand,

> wherein the continuous glass multifilament strands are arranged essentially parallel with each other,
> wherein the continuous glass multifilament strands are arranged essentially in the same plane,
> wherein the continuous glass multifilament strands are imbedded in a thermoplastic polymer,
> wherein the total amount of continuous glass multifilament strand is in the range of 55 to 70wt% based on the a glass fiber reinforced polymer tape,
> **characterized in that**, the glass continuous glass multifilament strand has a tex number in the range from 568 to 980, and
> the glass fiber reinforced polymer tape has a thickness in the range from 0.15 to 1.48 mm.

12. The tape according to claim 11, wherein the glass fiber reinforced polymer tape has a thickness in the range from 0.35 to 1.35 mm, preferably in the range from 0.40 to 1.18 mm.

13. The tape according to claims 11 or 12, wherein the thermoplastic polymer has an MFI in the range from 20 to 83 dg/min as measure according to ISO1133, 230°C/2.16 kg.

14. The tape according to any one of claims 10 to 13 wherein the tex number of the continuous glass multifilament strand is in the range from 568 to 856, preferably in the range from 585 to 750.

15. A laminate made from the tape of any one of claims 10 to 14, preferably the laminate is a cross-ply laminate.

**Patentansprüche**

1. Prozess zur Herstellung eines glasfaserverstärkten Polymerbands, umfassend die aufeinanderfolgenden Schritte zum

a) Abwickeln von einem Wickelkörper von mindestens einem kontinuierlichen Glasmultifilamentstrang;

b) Aufbringen des Imprägniermittels auf die kontinuierlichen Glasmultifilamentstränge, um die imprägnierten kontinuierlichen Multifilamentstränge zu bilden

c) Aufbringen einer Ummantelung aus thermoplastischem Polymer um den Multifilamentstrang, um einen ummantelten kontinuierlichen Multifilamentstrang zu bilden, wobei:

- wobei die Tex-Nummer des Glasmultifilamentstrangs im Bereich von 568 bis 980 liegt,
- die Menge des mindestens einen kontinuierlichen Glasmultifilamentstrangs in der Zusammensetzung 55 bis 70 Gew.-% bezogen auf das Gesamtgewicht der Zusammensetzung beträgt.

d) Bereitstellen der in Schritt c) erhaltenen Vielzahl von ummantelten kontinuierlichen Multifilamentsträngen,

e) Platzieren der Vielzahl von ummantelten kontinuierlichen Multifilamentsträngen in paralleler Ausrichtung in der Längsrichtung,

f) Gruppieren der Vielzahl von ummantelten kontinuierlichen Multifilamentsträngen,

wobei Schritte e) und f) derart durchgeführt werden, dass der ummantelte kontinuierliche Multifilamentstrang konsolidiert werden kann und

g) nachfolgendes Konsolidieren der Vielzahl von ummantelten kontinuierlichen Multifilamentsträngen, um ein Band zu bilden.

2. Prozess nach Anspruch 1, wobei der mindestens eine kontinuierliche Glasmultifilamentstrang ein kontinuierlicher Glasmultifilamentstrang ist.

3. Prozess nach Anspruch 1 oder 2, wobei das thermoplastische Polymer eine Polypropylenzusammensetzung mit einem MFI im Bereich von 20 bis 83 dg/min gemessen nach ISO1133, 230 °C/2,16 kg ist.

4. Prozess nach einem der vorstehenden Ansprüche, wobei die Tex-Nummer des Glasmultifilamentstrangs im Bereich von 568 bis 856, bevorzugt im Bereich von 585 bis 750 liegt.

5. Prozess nach einem der vorstehenden Ansprüche, wobei die Menge des mindestens einen kontinuierlichen Glasmultifilamentstrangs in der Zusammensetzung 55 bis 70 Gew.-%, bevorzugter im Bereich davon, bezogen auf das Gesamtgewicht des Bands beträgt.

6. Prozess nach einem der vorstehenden Ansprüche, wobei der Prozess bei einer Liniengeschwindigkeit von mindestens 100 m/min abläuft.

7. Prozess nach einem der vorstehenden Ansprüche, wobei der in Schritt c) gebildete ummantelte kontinuierliche Multifilamentstrang während der Schritte a)-g) nicht geschnitten wird.

8. Prozess nach einem der vorstehenden Ansprüche, wobei der Prozess weiter Schritt h) des Schneidens des durch Schritt g) erhaltenen Bands in eine gewünschte Länge umfasst.

9. Prozess nach einem der vorstehenden Ansprüche, wobei Schritt g) durch aufeinanderfolgende Schritte durchgeführt wird zum

g1) Erhitzen und Anwenden von Druck auf die Vielzahl von ummantelten kontinuierlichen Multifilamentsträngen, um ein Produkt aus konsolidierten Strängen zu erhalten, und

g2) Kühlen und Verfestigen des durch Schritt g1) erhaltenen Produkts, z. B. durch Kühlwalzen, ein Wasserbad, ein Gebläse, einen Lüfter oder ein Hochgeschwindigkeits-Luftmesser.

10. Prozess nach einem der Ansprüche 9, wobei Schritt g1) durch aufeinanderfolgende Schritte durchgeführt wird zum

g1a) Schmelzen der Vielzahl von ummantelten kontinuierlichen Multifilamentsträngen, um die Stränge zu verschmelzen, z. B. durch Warmwalzen, Flachriemen, einen Ofen oder eine Bandpresse und

g1b) Aufbringen von Druck auf das durch Schritt g1a) erhaltene Produkt, z. B. durch Kalanderwalzen, um seine Dicke anzupassen.

11. Glasfaserverstärktes Polymerband, umfassend eine Vielzahl von kontinuierlichen Glasmultifilamentsträngen,

wobei die kontinuierlichen Glasmultifilamentstränge im Wesentlichen parallel zueinander angeordnet sind, wobei die kontinuierlichen Glasmultifilamentstränge im Wesentlichen in derselben Ebene angeordnet sind, wobei die kontinuierlichen Glasmultifilamentstränge in ein thermoplastisches Polymer eingebettet sind, wobei die Gesamtmenge an kontinuierlichem Glasmultifilamentstrang im Bereich von 55 bis 70 Gew.-% bezogen auf ein glasfaserverstärktes Polymerband liegt, **dadurch gekennzeichnet, dass** der kontinuierliche Glasmultifilamentstrang eine Tex-Nummer im Bereich von 568 bis 980 aufweist und das glasfaserverstärkte Polymerband eine Dicke im Bereich von 0,15 bis 1,48 mm aufweist.

12. Band nach Anspruch 11, wobei das glasfaserverstärkte Polymerband eine Dicke im Bereich von 0,35 bis 1,35 mm, bevorzugt im Bereich von 0,40 bis 1,18 mm aufweist.

13. Band nach Anspruch 11 oder 12, wobei das thermoplastische Polymer einen MFI im Bereich von 20 bis 83 dg/min gemessen nach ISO1133, 230 °C/2,16 kg aufweist.

14. Band nach einem der Ansprüche 10 bis 13, wobei die Tex-Nummer des kontinuierlichen Glasmultifilamentstrangs im Bereich von 568 bis 856, bevorzugt im Bereich von 585 bis 750 liegt.

15. Laminat, hergestellt aus dem Band nach einem der Ansprüche 10 bis 14, wobei das Laminat ein Kreuzlagenlaminat ist.


**Revendications**

1. Processus de production d'une bande polymère renforcée de fibres de verre, comprenant les étapes suivantes consistant à

   a) dérouler au moins un brin multifilament de verre continu d'un enroulement ;
   b) appliquer l'agent d'imprégnation aux brins multifilaments de verre continus pour former les brins multifilaments continus imprégnés
   c) appliquer une gaine de polymère thermoplastique autour dudit brin multifilament pour former un brin multifilament continu gainé, dans lequel :

      - où le numéro tex du brin multifilament de verre se trouve dans la plage allant de 568 à 980,
      - la quantité de l'au moins un brin multifilament de verre continu dans la composition est de 55 à 70% en poids par rapport au poids total de la composition.

   d) fournir la pluralité de brins multifilaments continus gainés obtenus dans l'étape c),
   e) placer la pluralité de brins multifilaments continus gainés en alignement parallèle dans la direction longitudinale,
   f) regrouper la pluralité de brins multifilaments continus gainés,
   où les étapes e) et f) sont réalisées de sorte que le brin multifilament continu gainé puisse être consolidé et
   g) consolider ensuite la pluralité de brins multifilaments continus gainés pour former une bande.

2. Processus selon la revendication 1, dans lequel l'au moins un brin multifilament de verre continu est un brin multifilament de verre continu.

3. Processus selon la revendication 1 ou 2, dans lequel le polymère thermoplastique est une composition de polypropylène avec un MFI dans la plage allant de 20 à 83 dg/min tel que mesuré selon la norme ISO1133, 230°C/2,16 kg.

4. Processus selon l'une quelconque des revendications précédentes, dans lequel le numéro tex du brin multifilament de verre se trouve dans la plage allant de 568 à 856, de préférence dans la plage allant de 585 à 750.

5. Processus selon l'une quelconque des revendications précédentes, dans lequel la quantité de l'au moins un brin multifilament de verre continu dans la composition est de 55 à 70% en poids, plus préférablement dans la plage par rapport au poids total de la bande.

6. Processus selon l'une quelconque des revendications précédentes, dans lequel le processus se déroule à une vitesse de ligne d'au moins 100 m/min.

7. Processus selon l'une quelconque des revendications précédentes, dans lequel le brin multifilament continu gainé formé dans l'étape c) n'est pas découpé pendant les étapes a) à g).

8. Processus selon l'une quelconque des revendications précédentes, dans lequel le processus comprend en outre l'étape h) consistant à découper la bande obtenue par l'étape g) en une longueur souhaitée.

9. Processus selon l'une quelconque des revendications précédentes, dans lequel l'étape g) est réalisée par les étapes séquentielles consistant à

g1) chauffer et appliquer une pression sur la pluralité de brins multifilaments continus gainés pour obtenir un produit réalisé en brins consolidés et
g2) refroidir et solidifier le produit obtenu par l'étape g1), par exemple par des rouleaux refroidisseurs, un bain-marie, un souffleur, un ventilateur ou une lame d'air à grande vitesse.

10. Processus selon la revendication 9, dans lequel l'étape g1) est réalisée par les étapes séquentielles consistant à

g1a) faire fondre la pluralité de brins multifilaments continus gainés pour fusionner les brins, par exemple par des rouleaux chauds, des courroies plates, un four ou une presse à courroie et
g1b) appliquer une pression sur le produit obtenu par l'étape g1a) pour ajuster son épaisseur, par exemple par des rouleaux de calandrage.

11. Bande polymère renforcée de fibres de verre comprenant une pluralité de brins multifilaments de verre continus,

dans laquelle les brins multifilaments de verre continus sont agencés essentiellement parallèlement les uns aux autres,
dans laquelle les brins multifilaments de verre continus sont agencés essentiellement dans le même plan,
dans laquelle les brins multifilaments de verre continus sont intégrés dans un polymère thermoplastique,
dans laquelle la quantité totale de brin multifilament de verre continu se trouve dans la plage allant de 55 à 70% en poids par rapport à la bande polymère renforcée de fibres de verre,
**caractérisée en ce que** le brin multifilament de verre continu a un numéro tex dans la plage allant de 568 à 980, et la bande polymère renforcée de fibres de verre a une épaisseur dans la plage allant de 0,15 à 1,48 mm.

12. Bande selon la revendication 11, dans laquelle la bande polymère renforcée de fibres de verre a une épaisseur dans la plage allant de 0,35 à 1,35 mm, de préférence dans la plage allant de 0,40 à 1,18 mm.

13. Bande selon la revendication 11 ou 12, dans laquelle le polymère thermoplastique a un MFI dans la plage allant de 20 à 83 dg/min tel que mesuré selon la norme ISO1133, 230°C/2,16 kg.

14. Bande selon l'une quelconque des revendications 10 à 13, dans laquelle le numéro tex du brin multifilament de verre continu se trouve dans la plage allant de 568 à 856, de préférence dans la plage allant de 585 à 750.

15. Stratifié réalisé à partir de la bande de l'une quelconque des revendications 10 à 14, de préférence le stratifié est un stratifié à plis croisés.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019122318 A
- WO 2019122317 A
- WO 2009080281 A1
- EP 1460166 A1
- EP 0206189 A1
- US 4338233 A
- EP 0921919 B1
- EP 0994978 B1
- EP 0397505 B1
- WO 2014053590 A1
- US 5017714 A
- US 5324820 A